# EUROPÄISCHE PATENTSCHRIFT

(11) **EP 3 023 235 B1**
(45) Veröffentlichungstag und Bekanntmachung des Hinweises auf die Patenterteilung: **24.06.2020**
(21) Anmeldenummer: 15195359.3
(22) Anmeldetag: 19.11.2015
(51) Int. Cl.: B29C 70/46, B29C 70/08, B29C 70/54, B29C 70/48, B32B 5/24, B32B 15/04, B32B 15/14, B32B 3/08, B32B 3/26

(54) **VERFAHREN ZUR HERSTELLUNG VON FASERVERBUNDBAUTEILEN UND EIN FASERVERBUNDBAUTEIL**
METHOD FOR PRODUCING FIBRE COMPOSITE COMPONENTS AND A FIBER COMPOSITE COMPONENT
PROCEDE DE FABRICATION D'ELEMENTS COMPOSITES FIBREUX ET ELEMENT COMPOSITE FIBREUX

(30) Priorität: 21.11.2014 DE 102014017201
(43) Veröffentlichungstag der Anmeldung: 25.05.2016
(73) Patentinhaber: Airbus Defence and Space GmbH, 85521 Ottobrunn (DE)
(72) Erfinder: Gajewski, Benjamin, 67169 Kallstadt (DE)
(74) Vertreter: Isarpatent

(56) Entgegenhaltungen:
- EP-A2- 0 904 930
- WO-A1-03/024705
- US-A- 4 902 215

## Beschreibung

Die Erfindung betrifft Verfahren zur Herstellung von Faserverbundteilen und ein Faserverbundteil.

Bei der Herstellung von Faserverbundbauteilen sollen die Verteilung des Matrixmaterials und die Imprägnierung des trockenen Fasermaterials möglichst schnell erfolgen. Bei Harzinjektionsverfahren in einer geschlossenen Kavität (z. B. beim RTM-Verfahren) kann die Infiltrationsgeschwindigkeit des Matrixmaterials durch eine Erhöhung des Injektionsdruckes gesteigert werden. Insbesondere bei der Herstellung von Bauteilen in Sandwich-Bauweise ist der maximale Injektionsdruck des Matrixmaterials jedoch durch die Werkstoffeigenschaften des Kernmaterials begrenzt. Bei einer zu hohen Einspritzgeschwindigkeit besteht die Gefahr, dass die eingelegten Fasermatten sich verschieben und so zum einen die Tragfähigkeit des Bauteils sinkt und sich eine Verstopfung des Fließspalts ergeben könnte.

Um eine weitere Steigerung der Infiltrationsgeschwindigkeit zu erreichen, muss es dem Matrixmaterial ermöglicht werden, sich möglichst ungehindert auszubreiten und das Fasermaterial zu durchtränken. Im Folgenden werden diesbezüglich verschiedene Ansätze vorgestellt. Es ist bekannt, dass sich durch Kanäle im Werkzeug, in dem das Faserverbundbauteil mit Matrixmaterial infiltriert wird, eine möglichst schnelle Verteilung des Matrixmaterials ermöglichen lässt. Das Matrixmaterial kann sich über die Kanäle schnell über die gesamte Bauteiloberfläche verteilen und dringt von diesen Kanälen aus in das Fasermaterial ein. Nachdem das Fasermaterial bereits vollkommen infiltriert ist, verbleibt bei diesem Verfahren Matrixmaterial in den Kanälen, härtet dort aus und verbleibt auf der Bauteiloberfläche. Diese Reinharzgebiete auf der Bauteiloberfläche sind meist unerwünscht. Es gibt verschiedene Möglichkeiten, um diesem unerwünschten Effekt entgegen zu wirken. Im Allgemeinen sehen diese Ansätze temporäre Fließkanäle im Werkzeug vor, welche während des Injektionsvorgangs eine schnelle Verteilung des Matrixmaterials zulassen, danach jedoch kein Verbleib von Matrixmaterial in ihnen ermöglichen. Dieses Vorgehen ist bspw. aus den Schriften US 6 406 659 B1 und DE 199 26 896 A1 bekannt. Dabei wird nach dem Hauptfüllprozess ein Schieber in den Fließkanal bewegt, und das dort vorhandene Material in die Form des Werkzeugs gedrückt.

Anstatt im Werkzeug, können, wie aus US 6 656 411 bekannt, bei der Herstellung von Sandwich-Bauteilen Verteilerkanäle ebenfalls im Kernmaterial vorgesehen werden. Das Matrixmaterial kann sich über die Kanäle schnell innerhalb des Bauteils verteilen und dringt von den Kanälen aus in das Fasermaterial ein.

Ein weiterer Ansatz, die Durchströmbarkeit des Werkzeugs während des Einspritzvorgangs, (auch Permeabilität) zu erhöhen, sieht vor, das formgebende Werkzeug während der Infiltration nicht komplett zuverschließen. Diese nicht-komplett geschlossene Stellung ist die Stellung, bei der die werkzeuginterne Kavität der Werkstücknegativform noch nicht erreicht ist. Vielmehr ist die Kavität um den nachfolgend beschriebenen Restspalt vergrößert. Diese Verfahren sind als advanced RTM (aRTM) oder Compression-RTM (C-RTM) bekannt. Während der Injektion des Matrixmaterials wird die formgebende Form nicht komplett geschlossen, sodass sich zwischen Fasermaterial und Form ein kleiner Spalt ergibt bzw. das Fasermaterial nicht so sehr kompaktiert wird. Die Kavität ist zu diesem Zeitpunkt jedoch bereits luftdicht verschlossen. Aufgrund des niedrigeren Kampaktierungsgrades bzw. des vorhandenen Spalts ist es dem Matrixmaterial möglich, sich schnell über die Bauteiloberfläche zu verteilen, von wo aus es in das Fasermaterial eindringt. Nachdem ausreichend Matrixmaterial in die Kavität injiziert wurde, wird die Form komplett geschlossen, sodass das Matrixmaterial restlos in das Fasermaterial gedrückt wird. Dieses Verfahren wird bspw. in der Schrift DE 101 57 655 B4 beschrieben. Mit dem Hintergrund ein Sandwich-Bauteil mit offenporigem Kernmaterial zu infiltrieren, sieht das Patent DE 100 07 373 C1 ein ähnliches Verfahren vor, wobei das Matrixmaterial in dem Spalt zwischen Form und Fasermaterial angeliert wird, bevor es in das Fasermaterial gedrückt wird.

Bei als aRTM oder C-RTM bekannten Verfahren besteht genauso wie bei den herkömmlichen RTM-Verfahren aufgrund der zunächst gewünscht mäßigen Kompaktierung des Fasermaterials weiter das Risiko, dass sich das Fasermaterial während der Verteilung des Matrixmaterials verschiebt, da das Matrixmaterial teilweise mit hohen Drücken injiziert wird.

Eine weitere Möglichkeit, eine schnelle Verteilung des Matrixmaterials zu realisieren, besteht darin, eine flächige Fließhilfe vorzusehen. Eine solche Fließhilfe ist ein textiles Halbzeug mit hoher Permeabilität. Häufig werden diese Fließhilfen als Geflecht, Gewirk, Gestrick, teilweise als Vlies oder andersartig ausgeführt. Solche flächigen Fließhilfen sind besonders aus dem Bereich der Harzinfusionsprozesse mit einseitig formgebendem Werkzeug (Resin Infusion unter Flexible Tooling, RIFT) bekannt.

Dokument DE 20 2008 012 572 U, welches sich mit der Herstellung von Sandwich-Verbundbauteilen durch Harzinfusionsverfahren beschäftigt, sieht vor, ein Kernmaterial beidseitig mit einer dränierenden Schicht zu umgeben, welche das Fließen des Harzes beim Injektionsvorgang verbessern soll. Die Verwendung einer flächigen Fließhilfe birgt den Nachteil, dass nach der Infiltration Matrixmaterial in ihr zurückbleibt und dort aushärtet. Die Fließhilfe stellt einen im Material enthaltenen Fremdkörper da, der u.a. aufgrund seiner Grenzschichten zum Harz eine Materialschwächung bewirken kann. Anders als bei RIFT-Verfahren, bei denen die flächige Fließhilfe nach Aushärtung des Matrixmaterials von der Bauteiloberfläche entfernt wird, ist dies nicht möglich, falls die Fließhilfe innerhalb des Bauteils positioniert wurde. Auch ergibt sich bei gleichen Festigkeitseigenschaften ein erhöhtes Bauteilgewicht.

Dokument WO 03/024705 A1 offenbart ein Verfahren zur Herstellung eines Faserverbundteils, wobei Körperelemente zur Bildung einer innenliegenden Schicht und eine Faserschicht zur Bildung einer außenliegenden Schicht mit einer dazwischen angeordneten Abstandshalterschicht in ein Werkzeug 20 eingebracht werden. Sowie die Abstandhalterschicht mit Harzmaterial gefüllt wird, schließt die Abstandhalterschicht zwischen den Körperelementen und der Faserschicht bestehende ungewollte Leerräume, indem die Abstandhalterschicht in die bestehenden Leerräume dringt.

Dokument EP 0 904 930 A2 offenbart ein Verfahren zur Herstellung eines Faserverbundteils, wobei bei in einem ersten Schritt in eine geöffnete Gussform Faserschichtmaterial und ein Abstandhalter in eine Hälfte der Gussform eingebracht werden, in einem zweiten Schritt der Abstandhalter mit flüssigem Harzmaterial gefüllt wird, und in einem dritten Schritt die eine Hälfte der Gussform von der geöffneten Anfangs-Position in die geschlossene End-Position gebracht wird, wobei der Abstandhalter komprimiert wird und dabei das Harzmaterial aus dem Abstandhalter in das Faserschichtmaterial gedrückt wird. Dabei ist die Gussform im zweiten Schritt fast geschlossen, so dass das Harzmaterial während des Einfüllens in die Gussform nicht mehr aus der Gussform entweichen kann.

Dokument US 4,902,215 offenbart ein in einer Gussform angeordnetes Faserverbundteil umfassend einen Schaumstoffkörper und eine auf einer Seite der Schaumschicht vorgesehene Verstärkungsschicht eines faserverstärkten Materials, wobei Abstandhalter auf das Material des faserverstärkten Materials und somit auf den Schaumstoffkörper drücken, wenn die Gussform evakuiert und mit Harzmaterial gefüllt wird.

Es ist die Aufgabe der Erfindung ein verbessertes Verfahren der Füllung von Gussformen, insbesondere nach dem RTM-Verfahren bereitzustellen, bei dem bei einer hohen Füllgeschwindigkeit ein schädliches Verschieben von vorhandenen Fasern oder Matten oder dergleichen nicht stattfindet.

Diese Aufgabe wird mit den Merkmalen des Anspruchs 1 und dem entsprechenden Verfahren sowie einem Faserverbundbauteil mit den Merkmalen des Anspruchs 8 gelöst. Vorteilhafte Ausführungsformen ergeben sich aus den abhängigen Ansprüchen.

Bei einem Verfahren zur Herstellung eines Faserverbundteils werden ein Schaumstoffkörper zur Bildung einer bevorzugt innenliegenden Schicht und eine Faserschicht zur Bildung einer außenliegenden Schicht und dazwischen befindliche Abstandshalter in ein Werkzeug eingebracht. Nachfolgend wird das Werkzeug bis auf einen geringen Restspalt geschlossen, ein aushärtbares Harz in das Werkzeug eingespritzt und das Werkzeug wird nach seiner ausreichenden Füllung zur Aushärtung des Harzes komplett geschlossen. Das Faserverbundteil kann, muss aber nicht, ein Sandwich-bauteil mit zwei außenliegenden stabilisierenden und/oder faserverstärkten Schichten sein. Vielmehr genügt es, dass eine Schaumschicht einseitig bedeckt ist. Selbstverständlich ergeben sich die erfindungsgemäßen Vorteile auch, wenn eine geschäumte Platte von beiden Seiten mit einer Deckschicht bedeckt wird. Auf diese Weise wird es ermöglicht, dass während des Einspritzens ein Spalt sichergestellt ist, dass aber dennoch das Werkzeug nach dem Einspritzen geschlossen werden kann, ohne das Schieber oder dergleichen verwendet werden müssen. Die Abstandhalter drücken sich nämlich insbesondere bei dem Schließen des Werkzeugs in die Schaumschicht.

Insbesondere sind die Abstandshalter Teil einer flächigen Struktur, wie insbesondere einem Blatt oder einer Folie, die dreidimensional derart verformt, geprägt, gestanzt, tiefgezogen und/oder geschnitten ist, so dass die Abstandshalter gegenüber einer Hauptebene der flächigen Struktur vortreten. Hierdurch ist es einfach die Abstandhalter zu positionieren. Es muss nämlich lediglich die Folie in das Werkzeug eingelegt werden.

Alternativ oder zusätzlich können ein oder mehrere längliche Objekte, wie insbesondere Fäden, Fasern, Drähte,.. etc., in das Werkzeug eingebracht werden, wobei diese Objekte entweder radial vorstehende Bereiche aufweisen, die als Abstandshalter dienen. Oder können diese Objekte auch eine Verzwirbelung oder eine Verdrehung oder eine Spiralform aufweisen, so dass diese Objekte selbst als Abstandshalter dienen. Diese länglichen Objekte können gitterartig vernetzt sein. Einzelne Fasern können technisch einfach mit derartigen Verdickungen versehen werden, so dass ein kostengünstig herstellbares Bauteil in das Werkzeug eingelegt wird. Durch die Längserstreckung der länglichen Objekte werden die Abstandhalter unmittelbar in den benötigten Abstand zueinander ausgerichtet. Auch wird beim Einsatz einzelner Fasern, bzw. länglicher Objekte kein flächiges Element, wie eine Folie in den Zwischenraum zwischen der Faserschicht und dem Schaumstoffkörper eingebracht, wodurch die Haftkraft dieser Schichten zueinander reduziert werden könnte. An den länglichen Objekten können radial lokal bzw. einseitig oder radial umlaufend Vorsprünge sein, so dass sich in etwa das Erscheinungsbild eines Stacheldrahts oder einer Perlenschnur ergibt.

Bei einem entsprechenden Verfahren werden insbesondere eine Mehrzahl einzelner Abstandselemente in einen Abstand von der Faserschicht und dem Schaumkörper eingebracht und diese Abstandselemente sind entweder einzelne Körper, die eingelegt und/oder mit dem Schaumkörper und/oder der Faserschicht verklebt werden oder die Abstandshalter werden vor dem Einbringen des Schaumkörpers in das Werkzeug mit dem Schaumkörper verbunden oder die Abstandshalter sind vor dem Einbringen der Faserschicht in das Werkzeug mit der Faserschicht oder zumindest einer Lage der Faserschicht verbunden worden. Hiermit wird nicht abschließend eine Anzahl unterschiedlicher Methoden der Herstellung beschrieben.

Insbesondere werden pro 80 cm² der Schaumkörperoberfläche zumindest ein Abstandshalter verwendet. Gerade wenn das die Abstandhalter umfassende Teil (wie z.B. eine Folie) so geformt ist, dass entweder eine weitgehend flächige Kontaktfläche zu der Faserschicht besteht oder ein Linienkontakt von dem Abstandhalter zu der Faserschicht besteht, kann diese Abstandhalterdichte ausreichen. Diese Abstandhalterdichte kann auch bei punktförmigen Kontakten von den Abstandhaltern zu der Faserschicht und/oder zu der Schaumkörperoberfläche zum Einsatz kommen. Gerade wenn die Abstandhalter punktförmige Kontakte zu der Schaumstoffschicht haben, kann eine größere Abstandhalterdichte vorteilhaft sein. So können mindestens 1 Abstandhalter pro cm² von der Abstandsoberfläche zu der Faserschicht bestehen, um so effektiv ein Verschieben des Fasermaterials zu verhindern.

Insbesondere sind die Abstandhalter so geformt, dass sie im Zustand, dass das Werkzeug in der teilgeschlossenen Stellung ist, eine größere Kontaktoberfläche zu der Faserschicht als zu dem Schaumstoffkörper aufweisen. Durch die geringere Kontaktfläche zum Schaumkörper können die Abstandhalter gut eingedrückt werden, wenn das Werkzeug in die (komplett) geschlossene Stellung fährt. Zudem besteht eine relativ größere Kontaktfläche zu der Faserschicht, was sicherstellt, dass eine Vielzahl der Fasern durch den Abstandhalter während dem Einspritzen in ihrer Lage gehalten wird.

Ein Faserverbundbauteil umfasst eine Schaumschicht und zumindest auf einer Seite, bevorzugt zu beiden Seiten, der Schaumschicht sind eine Verstärkungsschicht eines faserverstärkten Materials vorgesehen und an einer Mehrzahl von Punkten oder Zonen sind Elemente, bevorzugt Abstandhalter, zumindest teilweise mit einer Tiefe von bis zu 3 mm, bevorzugt bis zu 1 mm, in das Material der Schaumschicht gedrückt und die Schaumschicht weist an diesem Bereich ein größere Dicke als die Eindrücktiefe der Körper auf. Die Abstandhalter können einzelne Teile sein, oder Bestandteil eines größeren Teils sein, an dem die Abstandhalter angeformt sind und in der Richtung zur Schaumschicht abstehen. Durch eine Messung, ob die einzelnen Blasen der Schaumschicht verletzt oder zerstört sind, kann überprüft werden, ob das Faserverbundteil mit dem vorstehend beschriebenen Verfahren hergestellt wurde.

Insbesondere sind zumindest Oberflächen des Elements, die nicht parallel zur Schaumschichtoberfläche sind, mit dem Kunststoff, der zur Bildung des faserverstärkten Materials dient, benetzt. Und diese Oberflächen stehen insbesondere zumindest teilweise in Kontakt zu dem Material der Schaumschicht. Es müssen nicht alle Oberflächen sein, die in Kontakt mit der Schaumschicht stehen. Durch den zweistufigen Prozess, nämlich dem weitgehenden Füllen des Werkzeugs in der teilgeschlossenen Stellung und dem nachfolgenden Komplett-Schließen des Werkzeugs werden Oberflächenabschnitte der Abstandhalter, die zunächst in dem vom Harz umströmten Bereich waren, in das Material des Schaumstoffkörpers gedrückt und dadurch werden diese Teile miteinander verklebt. Die Poren bzw. Zellen des Schaumstoffs, die benachbart zu den Abstandhaltern liegen, sind insbesondere kollabiert. So können die Zellhäute bzw. Trennwände des Schaumstoffs benachbart zu den Abstandhaltern, unmittelbar nebeneinander liegen. Dieser Bereich kann mit Harz versetzt sein.

Im Folgenden werden bevorzugte Ausführungsbeispiele der Erfindung anhand von schematischen Darstellungen näher erläutert. Es zeigen:
- Fig. 1: eine schematische Ansicht eines Faserverbundteils vor dem Einbringen des Kunststoffs,
- Fig. 2: ein Faserverbundteil im Schnitt einer schematischen Ansicht,
- Fig. 3: eine schematische Ansicht eines RTM-Werkzeugs im Schnitt vor dem Einspritzen des Kunststoffs in einer teilgeschlossener Stellung,
- Fig. 4: das Werkzeug gemäß Fig. 3 in der geschlossenen Stellung,
- Fig. 5: einzelne Ansichten von alternativen Abstandshaltern im Querschnitt,
- Fig. 6: eine schematische Ansicht von Abstandshaltern, die an einer Faser oder einem Faden oder dergleichen aufgereiht sind,
- Fig. 7: eine schematische Ansicht eines spiralförmigen Abstandshalters,
- Fig. 8: eine Ansicht eines flächigen Abstandshalters,
- Fig. 9: zwei Ansichten zur Erläuterung der Herstellung eines Trägers von Abstandshaltern und
- Fig. 10: zwei Ansichten zur Erläuterung der Herstellung eines Trägers von Abstandshaltern in einer alternativen Ausführungsform.

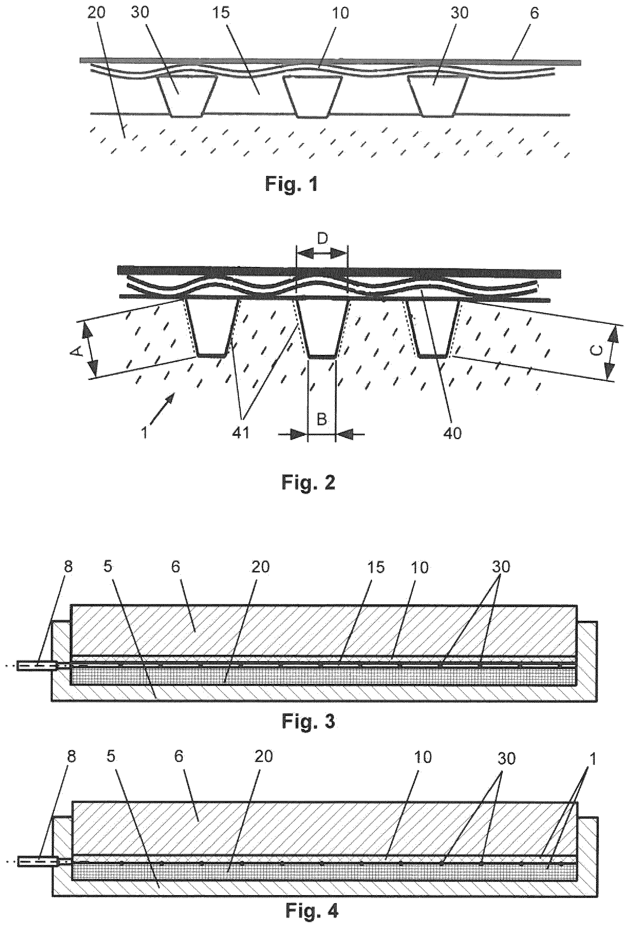

Der seitliche Schnitt der Fig. 1 zeigt den Aufbau eines Faserverbundteils 1 vor der Einbringung des Harzes. Unten ist ein Teil eines Schaumstoffkörpers 20, insbesondere einer Schaumstoffschicht, gezeigt. Oben ist in dieser Figur als einfache Linie die Unterseite eines Werkzeugoberteils 6 gezeigt. Drunter befindet sich eine Faserschicht 10. Zwischen der Faserschicht 10 und dem Schaumstoffkörper 20 befindet sich ein Abstand, der mit Luft gefüllt ist und in der Folge als (Rest-)Spalt 15 bezeichnet wird. Dieser Bereich kann evakuiert sein. Zur Bildung und Aufrechterhaltung dieses Spalts 15 ist eine Mehrzahl von Abstandshaltern 30 in ihn eingebracht, die jeweils in Kontakt mit dem Schaumstoffkörper 20 und der Faserschicht 15 stehen.

Das Werkzeug ist ein RTM-Werkzeug (Resin Transfer Molding) und weist das Oberteil 6 und ein Unterteil 5 auf, die gegeneinander verschiebbar sind und zwischen denen sich eine Kavität als Negativform für das herzustellende Bauteil befindet. Über zumindest einen Einspritzpunkt 8 kann gemäß Fig. 3 das Harz in die Kavität gespritzt werden. Vergleichbar zu der in Fig. 1 gezeigten Situation ist dort das Werkzeug in einer nicht komplett geschlossenen Stellung gezeigt, so dass der Restspalt 15 vorhanden ist.

Der Herstellvorgang des Faserverbundteils ergibt sich wie folgt: Zunächst werden der Schaumstoffkörper 20, die Abstandhalter 30 und die Faserschicht 10 in das geöffnete Werkzeug eingebracht. Dabei ist es egal, ob die Faserschicht 10 in das Werkzeugoberteil 6 eingebracht wird, oder als dritte Bauelement in das Werkzeugunterteil 5. Auch können abhängig von den konstruktiven Bedingungen die Abstandhalter mittelbar an dem Werkzeugoberteil oder -unterteil platziert werden. Der Aufbau kann auch gespiegelt sein, so dass z.B. die Schaumstoffschicht 20 benachbart zum Werkzeugoberteil 6 ist. In einer bevorzugten Ausführungsform kann das Faserverbundteil auch einen Sandwichaufbau haben, so dass ein Schaumstoffkörper (oder allgemeiner eine Schaumstoffschicht) zwischen zwei Faserschichten angeordnet ist.

Gemäß Fig. 1 ist ersichtlich, dass die Abstandhalter 30 leicht in den Schaumstoffkörper 20 eingedrückt sind. Dies ergibt sich daher, weil in der teilgeschlossenen Stellung ein leichter Druck in Spaltquerrichtung, also der Werkzeugschließrichtung, besteht. Dieser Druck ist bspw. dann hilfreich, wenn einzelne, nicht miteinander verbundene Abstandhalter 30 verwendet werden, um beim Einspritzen zu verhindern, dass sie ihre Lage verlieren. In der teilgeschlossenen Stellung kann die Kavität bereits luftdicht verschlossen sein. Es bietet sich an, die Kavität vor der Infiltration zu evakuieren, um Porenbildung am späteren Bauteil zu minimieren. Ferner sollen die Abstandhalter 30 dafür sorgen, dass die einzelnen Fasern oder Faserpakete der Faserschicht 10 ihre Lage bei dem Einspritzen des Kunststoffs nicht verlieren, was sich durch den ergebenden lokalen Andruck von der Faserschicht 10 gegen das Werkzeugoberteil 6 ergibt.

Das Kunstharz wird über den Einspritzpunkt 8 (oder mehrere entsprechende Einspritzpunkte) in das Werkzeug eingespritzt, wenn es sich in der teilgeschlossenen Stellung befindet. Gegenüber den im Stand der Technik beschriebenen Verfahren wird hierbei das Risiko der Verschiebung von Fasermaterial minimiert, da das Fasermaterial zwischen Abstandselementen und formgebendem Werkzeug fixiert ist. Wenn das Werkzeug ausreichend gefüllt ist, so wird das Einspritzen beendet und das Werkzeugoberteil 6 verschoben, dass es in die geschlossene Position gemäß Fig. 4 kommt. Gleichzeitig werden die Abstandselemente in das Kernmaterial des Sandwich-Bauteils gedrückt. Dieses ist insbesondere eine Schaumstoffschicht. Über eine entsprechende Druck- und Temperaturführung wird das Harz ausgehärtet. Dabei sorgt der Druck auch dafür, dass das Harz sich innerhalb des Werkzeugs gleichmäßig verteilt. Bereits im teilgeschlossenen Zustand des Werkzeugs, also wenn das Werkzeug bis auf einen geringen Restspalt geschlossen ist, ist das Werkzeug hermetisch dicht, so dass ein Vakuum an das Werkzeuginnere gelegt werden kann, so dass das Werkzeug lufteinschlussfrei gefüllt werden kann.

Durch das Eindringen der Abstandselemente in das Kernmaterial wird das zuvor von ihnen bereitgestellte Volumen zwischen Kern- und Fasermaterial weitgehend aufgegeben. Verglichen mit den im Stand der Technik vorgestellten Verfahren, bei denen Verteilerkanäle verwendet werden, ergeben sich zwei Vorteile: Zum einen muss kein teures und aufwendige Wartungsarbeiten verlangendes Werkzeug verwendet werden. Zum anderen werden Reinharzgebiete vermieden.

In Fig. 2 sind unterschiedliche Zonen A, B, C und D der Oberfläche des Abstandhalters 30 gezeigt. Eine Grundfläche B ist die Fläche die in dem teilgeschlossenen Zustand im Kontakt dem Schaumstoffkörper 20. Die benachbarten Seiten A und C stehen bei dem Einspritzvorgang in Kontakt zu dem Harz. Bei anderen Formen des Abstandhalters können die Flächen A und C als eine umlaufende Mantelfläche oder Kreisflächenabschnitt ausgebildet sein. Wenn das Werkzeug geschlossen wird, so drücken sich, wie in Fig. 2 gezeigt, die Abstandhalter 30 in den Schaumstoffkörper 20 ein. Ein Teil des in Kontakt mit den Flächen A und C stehenden Kunststoffs wird dabei zwar abgeschert, aber es bleibt insbesondere eine Teilbenetzung eines Harzfilms 41 an diesen Oberflächen bestehen, was bewirkt, dass die Abstandhalter 30 mit dem Schaumstoffkörper 20 verkleben. Bevorzugt können die Abstandhalter 30 so aufgebaut sein, dass die der genannten Kontaktfläche B gegenüberliegende Fläche D, die in Kontakt mit der Faserschicht 10 steht, größer ist als die Fläche B. Hierdurch wird eine geringere Flächenpressung auf die Faserschicht 10 ausgeübt, was die Gefahr reduziert, dass die Fasern sich verschieben. Und über die größere Kontaktfläche wird ein größerer Bereich der Fasern gegen ein Verschieben während des Einspritzvorgangs geschützt.

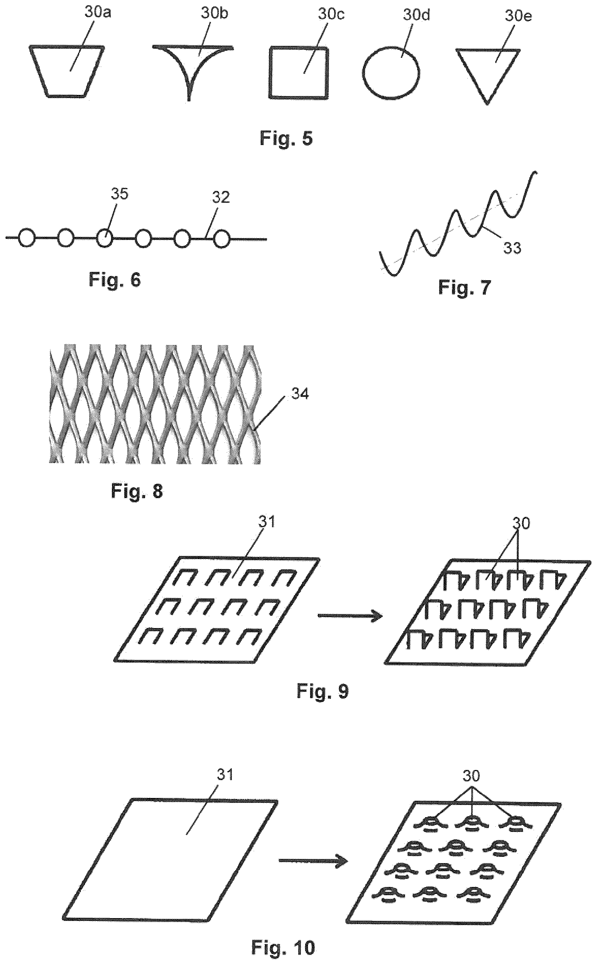

Die Abstandhalter können als einzelne Objekte verwendet werden, oder es kann ein Träger 32 für die Abstandhalter verwendet werden, der länglich oder flächig ist. In diesem Sinne zeigt Fig. 6 eine Faser, Faden oder Draht 32 an dem einige (kugelförmige) Objekte 35 angeordnet sind. Diese Objekte können Kugeln, Klebepunkte oder dergleichen sein, die gegenüber dem Objekt 32 radial vorstehen. Dieses "Vorstehen" kann radial umlaufend weitgehend gleichmäßig sein oder in eine oder mehrere bevorzugte Richtungen ausgerichtet sein, so dass die Abstandhalter der Form eines Stacheldrahts (nicht gezeigt) ähneln.

Fig. 5 zeigt eine Mehrzahl verwendbarer Querschnitte, wobei andere nicht gezeigte Geometrien auch zum Einsatz kommen können. Die in Fig. 6 gezeigten perlenartig aufgereihten Objekte 35 können mit einem der in Fig. 5 gezeigten Querschnitte geformt sein, oder es können die in Fig. 1 und 2 gezeigten einzeln eingebrachten Abstandhalter 30 entsprechend geformt sein. Die Trapezform 30a der Fig. 5 wurde bereits in Bezug auf Fig. 1 und 2 erläutert. Fig. 5 zeigt mit der Keilform 30b eine Ausführungsform, bei der ein Keil des Öffnungswinkels bis zu 60°, bevorzugt bis zu 30°, spitz auf den Schaumstoffkörper 20 ausgerichtet zum Einsatz kommt. Durch diese Form wird das Eindringen in den Schaum beim Schließen des Werkzeugs erleichtert, ohne unzulässig hohe Drücke auf die Faserschicht 10 auszuüben. Die Quadratform 30c kann dreidimensional als Quadrat oder Quader oder säulenförmig ausgebildet sein. Die Kugelform 30d ist einfach zu fertigen und aufgrund ihrer Symmetrie kann ein gewünschter Spalt in der teilgeschlossenen Stellung auch dann erreicht werden, wenn auf die Orientierung des Abstandshalter 30d nicht geachtet wird. Die gleichmäßige Form des Prismas oder der Pyramide gemäß 30e verbindet geringe Eindrückkräfte beim Schließen der Form mit einer weitgehenden Symmetrie.

Fig. 7 zeigt eine Ausführungsform 33 eines Abstandhalters, bei der ein Draht oder eine Faser spiralförmig ist. Dies kann insbesondere eine Kunststoff- oder Glasfaser sein. Eine ausreichende Steifigkeit sorgt dafür, dass sich im Werkzeug in der teilgeschlossenen Stellung ein ausreichender Druck auf die Faserschicht aufbaut. Diese spiralförmigen Abstandhalter 33 können bereits ein Teil der Faserschicht sein. So können bspw. bis zu 10% der Fasern der Faserschicht spiralförmig sein und die restlichen Fasern sind langgestreckt, um so für die Tragfähigkeit des Bauteils zu sorgen. Eine Spiralform liegt insbesondere dann vor, wenn über einen definierten Abschnitt der Faser wiederholt radiale Auslenkungen der Faserbiegung vorliegen, die mehr als das 5-fache des Faserdurchmessers ausmachen.

Die Ausführung der Fig. 8 wird als Streckmetall oder Streckgeometrie bezeichnet und entsteht, indem man eine Vielzahl von Schlitzen in jeweils zueinander versetzten Reihen an einem Blech oder einer Folie anordnet und dann quer zur Schlitzlängsrichtung dehnt. Dabei ergibt sich durch Verwindungen eine dreidimensionale Struktur, die in den Werkzeugspalt eingelegt werden kann und so als Abstandhalter dient. Falls gewünscht können Prägungen die Abstandshalterhöhen erhöhen.

Fig. 9 zeigt eine weitere alternative Ausführungsform, bei der eine Folie 31 mit einer Vielzahl von u-förmigen Perforationen versehen wird, die anschließend in Folienquerrichtung verbogen werden. Die Folie hat eine ausreichende Stabilität, dass die sich so ergebenden Abwinklungen, die als Abstandhalter 30 zum Einsatz kommen, in ihrer gebogenen Form verbleiben. Der Einbau geschieht bevorzugt so, dass die Grundfläche der Folie in Kontakt mit der Faserschicht 10 kommt und die Abstandshalter insbesondere senkrecht zu dem Schaumstoffkörper 20 ausgerichtet sind, um sich so leicht in ihn eindrücken zu können. Das Harz kann sich zu beiden Seiten der Folie 31 ausbreiten, da zum einen die Abstandshalter 30 einen freien Bereich definieren und zum anderen zwischen den einzelnen Fasern bzw. Faserpaketen der Faserschicht 10 ausreichende freie Räume bestehen.

Und in Fig. 10 ist eine weitere Alternative gezeigt, die ringförmige Verformungen aufweist. Die Ringform erhöht im Vergleich zu Fig. 9 die Formstabilität der sich so ergebenden Abstandhalter 30. Mittig in den Abstandhaltern 30 kann ein Teil der Folie ausgestanzt sein, um einen Harzfluss von der einen Seite zur anderen Seite der Folie zu erlauben. Auch können auf der nicht verformten Grundfläche der Folie zu diesem Zweck Ausstanzungen vorgesehen sein.

Der Schaum 35 ist bevorzugt ein definierter, niedriger, fein- und/oder geschlossenzelliger Schaum mit bevorzugt einer homogenen Dichte. Es eignen sich Polyurethanschäume, da sie eine hohe Härte aufweisen. Ferner eignen sich insbesondere Polyvinylchlorid (PVC)- Polypropylen(PP)- Polyethylen(PE)-, Polyethylenterephtalat (PET)- Polybutylenterephtalat (PBT)-, Polystylrol (PS)-, expandierte Polystyrol (EPS)- oder vernetzte Polystryrol (XPS)-Schäume. Bevorzugt wird ein geschlossenzelliger Schaum verwendet, um zu vermeiden, dass der Schaum sich mit dem Harz füllt, was neben den Materialkosten auch das Bauteilgewicht erhöht.

Als Harz kann bevorzugt Epoxidharz oder ein Harz auf Vinylesterbasis oder dergleichen verwendet werden.

Die Dicke der Decklage, also der Faserschicht 10, kann bspw. 0,6 mm betragen, wobei bevorzugt Dickenbereiche von 0,2 mm bis 3 mm verwendet werden können. Der beschriebene Spalt 15, durch den das Harz einfließen kann, also die Wegdifferenz des Werkzeugs zwischen der teilgeschlossenen und der geschlossenen Stellung, beträgt bevorzugt 0,1 bis 1,0 mm, wobei bei großen Bauteilen der Spalt bis zu 3 mm betragen kann. Insbesondere ist eine Spaltdicke von 0,2 bis 0,3 mm vorteilhaft. Die Durchmesser und/oder die Dicke der Abstandhalter kann der Spaltdicke entsprechen. Die Dichte der Abstandhalter beträgt bei der beschriebenen Ausführungsform 1 Abstandhalter pro 10 cm². Vorteilhaft ist insbesondere eine Abstandhalterdichte im Bereich von 1 Stück pro 1 bis 80 cm².

### Bezugszeichen:

- 1: Faserverbundteil
- 5: Werkzeugunterteil
- 6: Werkzeugoberteil
- 8: Einspritzpunkt
- 10: Faserschicht
- 15: (Rest-)Spalt
- 20: Schaumstoffkörper
- 30: Abstandhalter
- 31: Folie
- 32: längliches Objekt, Faser, Faden, etc.
- 33: Spirale
- 34: gitterförmiges Objekt
- 35: Kugel, Klebepunkt, etc.
- 40: Harz
- 41: Harzfilm

## Patentansprüche

1. Verfahren zur Herstellung eines Faserverbundteils (1), wobei ein Schaumstoffkörper (20) zur Bildung einer bevorzugt innenliegenden Schicht und eine Faserschicht (10) zur Bildung einer außenliegenden Schicht und dazwischen befindliche Abstandshalter (30) in ein Werkzeug (5,6) eingebracht werden, nachfolgend das Werkzeug (5, 6) bis auf einen geringen Restspalt (15) geschlossen wird, ein aushärtbares Harz (40) in das Werkzeug (5,6) eingespritzt wird und das Werkzeug (5,6) nach seiner ausreichenden Füllung zur Aushärtung des Harzes (40) komplett geschlossen wird,
wobei die Abstandshalter (30) Teil einer flächigen Struktur sind, die dreidimensional derart verformt, geprägt, gestanzt, tiefgezogen und/oder geschnitten ist, so dass die Abstandshalter (30) gegenüber einer Hauptebene der flächigen Struktur vortreten, und
wobei sich Abschnitte der Abstandhalter (30) durch die Werkzeugbewegung von der Restspaltstellung in die geschlossene Stellung in den Schaumstoffkörper (20) eindrücken.

2. Verfahren gemäß Anspruch 1, **dadurch gekennzeichnet, dass** die flächige Struktur insbesondere ein Blatt oder eine Folie (31) ist.

3. Verfahren gemäß einem der vorangegangenen Ansprüche, **dadurch gekennzeichnet, dass** eine oder mehrere längliche Objekte (32), wie insbesondere Fäden, Fasern, Drähte,. etc., in das Werkzeug (5, 6) eingebracht werden, wobei diese Objekte (32) entweder radial vorstehende Bereiche aufweisen, die als Abstandshalter dienen, oder wobei diese Objekte eine Verzwirbelung oder eine Verdrehung oder eine Spiralform aufweisen, so dass diese Objekte als Abstandshalter (30) dienen.

4. Verfahren gemäß einem der vorangegangenen Ansprüche, **dadurch gekennzeichnet, dass** eine Mehrzahl einzelner Abstandselemente (30) in den Abstand von der Faserschicht und dem Schaumkörper (20) eingebracht werden und diese Abstandselemente (30) entweder einzelne Körper sind, die eingelegt und/oder mit dem Schaumkörper und/oder der Faserschicht verklebt werden oder
die Abstandshalter (30) vor dem Einbringen des Schaumkörpers (20) in das Werkzeug mit dem Schaumkörper (20) verbunden wurden oder die Abstandshalter vor dem Einbringen der Faserschicht (10) in das Werkzeug (5,6) mit der Faserschicht (10) oder zumindest einer Lage der Faserschicht verbunden wurden sind.

5. Verfahren gemäß einem der vorangegangenen Ansprüche, **dadurch gekennzeichnet, dass** pro 80 cm2 der Schaumkörperoberfläche zumindest ein Abstandshalter verwendet wird.

6. Verfahren gemäß einem der vorangegangenen Ansprüche, **dadurch gekennzeichnet, dass** pro 10 cm2 der Schaumkörperoberfläche zumindest ein Abstandshalter verwendet wird.

7. Verfahren gemäß einem der vorangegangenen Ansprüche, **dadurch gekennzeichnet, dass** Abstandhalter so geformt sind, dass sie im Zustand, dass das Werkzeug im Zustand der teilgeschlossenen Stellung ist, eine größere Kontaktoberfläche zu der Faserschicht (10) als zu dem Schaumstoffkörper (20) aufweisen.

8. Faserverbundbauteil umfassend einen Schaumstoffkörper (20) und eine zumindest auf einer Seite, bevorzugt zu beiden Seiten, der Schaumschicht vorgesehene Verstärkungsschicht eines faserverstärkten Materials, **dadurch gekennzeichnet, dass** an einer Mehrzahl von Punkten oder Zonen Abstandhalter (20), welche zwischen dem Schaumstoffkörper (20) und der zumindest einen Verstärkungsschicht angeordnet sind, zumindest teilweise mit einer Tiefe von bis zu 3 mm, bevorzugt bis zu 1 mm, in das Material des Schaumstoffkörpers (20) eingedrückt sind und insbesondere der Schaumstoffkörper (20) an diesem Bereich ein größere Dicke als die Eindrücktiefe der Abstandhalter (20) aufweist,
wobei die Abstandshalter (30) Teil einer flächigen Struktur sind, die dreidimensional derart verformt, geprägt, gestanzt, tiefgezogen und/oder geschnitten ist, so dass die Abstandshalter (30) gegenüber einer Hauptebene der flächigen Struktur vortreten.

9. Faserverbundbauteil gemäß Anspruch 8, wobei die flächige Struktur insbesondere ein Blatt oder eine Folie (31) ist.

10. Faserverbundbauteil gemäß Anspruch 8 oder 9, wobei zumindest Oberflächen des Abstandhalters (20), die nicht parallel zur Schaumschichtoberfläche sind, mit dem Kunststoff, der zur Bildung des faserverstärkten Materials dient, benetzt sind, und diese Oberflächen zumindest teilweise in Kontakt zu dem Material der Schaumschicht stehen.

## Claims

1. Method for producing a fibre composite part (1), wherein a foam material body (20) for forming a preferably inner layer and a fibre layer (10) for forming an outer layer and spacers (30) situated therebetween are introduced into a mould (5, 6), the mould (5, 6) is then closed apart from a small residual gap (15), a curable resin (40) is injected into the mould (5, 6), and the mould (5, 6), after it has been sufficiently filled, is completely closed in order to secure the resin (40),
wherein the spacers (30) are part of a sheet-like structure which is three-dimensionally deformed, embossed, punched, thermoformed and/or cut in such a way that the spacers (30) protrude with respect to a main plane of the sheet-like structure, and
wherein portions of the spacers (30) press into the foam material body (20) as a result of the mould movement from the residual gap position into the closed position.

2. Method according to Claim 1, **characterized in that** the sheet-like structure is in particular a sheet or a film (31).

3. Method according to either of the preceding claims, **characterized in that** one or more elongate objects (32), such as in particular threads, fibres, wires, etc., are introduced into the mould (5, 6), wherein these objects (32) either have radially projecting regions which serve as spacers, or wherein these objects have a convolution or a twist or a spiral shape, with the result that these objects serve as spacers (30).

4. Method according to one of the preceding claims, **characterized in that** a plurality of individual spacer elements (30) are introduced into the spacing separating the fibre layer and the foam body (20), and these spacer elements (30) are either individual bodies which are inserted and/or adhesively bonded to the foam body and/or the fibre layer,
or
the spacers (30) have been connected to the foam body (20) before the foam body (20) is introduced into the mould, or the spacers have been connected to the fibre layer (10) or at least one ply of the fibre layer before the fibre layer (10) is introduced into the mould (5, 6).

5. Method according to one of the preceding claims, **characterized in that** at least one spacer is used per 80 cm² of the foam body surface.

6. Method according to one of the preceding claims, **characterized in that** at least one spacer is used per 10 cm² of the foam body surface.

7. Method according to one of the preceding claims, **characterized in that** spacers are shaped in such a way that, in the state in which the mould is in the partially closed position, they have a greater contact surface to the fibre layer (10) than to the foam material body (20).

8. Fibre composite component comprising a foam material body (20) and a reinforcing layer of a fibre-reinforced material that is provided at least on one side, preferably on both sides, of the foam layer, **characterized in that** spacers (20), which are arranged between the foam material body (20) and the at least one reinforcing layer, are pressed, at least partially with a depth of up to 3 mm, preferably up to 1 mm, into the material of the foam material body (20) at a plurality of points or zones, and in particular the form material body (20) has a greater thickness than the pressed-in depth of the spacers (20) at this region,
wherein the spacers (30) are part of a sheet-like structure which is three-dimensionally deformed, embossed, punched, thermoformed and/or cut in such a way that the spacers (30) protrude with respect to a main plane of the sheet-like structure.

9. Fibre composite component according to Claim 8, wherein the sheet-like structure is in particular a sheet or a film (31).

10. Fibre composite component according to Claim 8 or 9, wherein at the surfaces of the spacer (20) that are not parallel to the foam layer surface are wetted with the plastic which serves for forming the fibre-reinforced material, and these surfaces are at least partially in contact with the material of the foam layer.

## Revendications

1. Procédé de fabrication d'un composant composite (1) renforcé par des fibres, un corps (20) en matière alvéolaire destiné à former une couche de préférence intérieure et une couche de fibres (10) destinée à former une couche extérieure et des éléments d'espacement (30) situés entre ceux-ci étant introduits dans un outil (5, 6), puis l'outil (5, 6) étant fermé à l'exception d'un petit espace restant (15), une résine durcissable (40) étant injectée dans l'outil (5, 6) et l'outil (5, 6) étant fermé complètement après avoir été rempli suffisamment afin de faire durcir la résine (40),
les éléments d'espacement (30) faisant partie d'une structure sensiblement bidimensionnelle qui est déformée en trois dimensions, matricée, estampée, emboutie profond et/ou découpée de sorte que les éléments d'espacement (30) dépassent d'un plan principal de la structure sensiblement bidimensionnelle, et
des portions des éléments d'espacement (30) étant enfoncées dans le corps (20) en matière alvéolaire par le mouvement de l'outil de la position avec espace résiduel à la position fermée.

2. Procédé selon la revendication 1, **caractérisé en ce que** la structure sensiblement bidimensionnelle est notamment une feuille ou un film (31).

3. Procédé selon l'une des revendications précédentes, **caractérisé en ce qu'**un ou plusieurs objets allongés (32), tels que notamment des fils, des fibres, des fils métalliques etc. sont introduits dans l'outil (5, 6), ces objets (32) comportant des zones saillant radialement qui servent d'éléments d'espacement, ou ces objets présentant un tourbillon ou une torsion ou une forme en spirale de sorte que ces objets servent d'éléments d'espacement (30).

4. Procédé selon l'une des revendications précédentes, **caractérisé en ce qu'**une pluralité d'éléments d'espacement individuels (30) sont introduits à distance de la couche de fibres et du corps (20) en matière alvéolaire et ces éléments d'espacement (30) sont des corps individuels qui sont insérés et/ou collés au corps en matière alvéolaire et/ou à la couche de fibres ou
les éléments d'espacement (30) ont été reliés au corps (20) en matière alvéolaire avant l'introduction du corps (20) en matière alvéolaire dans l'outil ou les éléments d'espacement ont été reliés à la couche de fibres (10) ou à au moins un niveau de la couche de fibres avant l'introduction de la couche de fibres (10) dans l'outil (5, 6).

5. Procédé selon l'une des revendications précédentes, **caractérisé en ce qu'**au moins un élément d'espacement est utilisé pour 80 cm2 de la surface du corps en matière alvéolaire.

6. Procédé selon l'une des revendications précédentes, **caractérisé en ce qu'**au moins un élément d'espacement est utilisé pour 10 cm2 de la surface du corps en matière alvéolaire.

7. Procédé selon l'une des revendications précédentes, **caractérisé en ce que** les éléments d'espacement sont conformés de façon à présenter, dans l'état dans lequel l'outil est en position partiellement fermée, une surface de contact avec la couche de fibres (10) supérieure à celle avec le corps (20) en matière alvéolaire.

8. Composant composite renforcé par des fibres comprenant un corps (20) en matière alvéolaire et au moins une couche de renforcement d'un matériau renforcé par des fibres, laquelle est prévue sur au moins un côté, de préférence des deux côtés, de la couche en matière alvéolaire, **caractérisé en ce que** des éléments d'espacement (20), qui sont situés entre le corps (20) en matière alvéolaire et l'au moins une couche de renforcement, sont disposés en une pluralité de points ou zones, sont enfoncés au moins partiellement à une profondeur allant jusqu'à 3 mm, de préférence jusqu'à 1 mm, dans le matériau du corps (20) en matière alvéolaire et en particulier le corps (20) en matière alvéolaire a une épaisseur dans cette zone qui est supérieure à la profondeur d'enfoncement des éléments d'espacement (20),
les éléments d'espacement (30) faisant partie d'une structure sensiblement bidimensionnelle qui est déformée en trois dimensions, matricée, estampée, emboutie profond et/ou découpée de sorte que les éléments d'espacement (30) dépassent d'un plan principal de la structure sensiblement bidimensionnelle.

9. Composant composite renforcé par des fibres selon la revendication 8, la structure sensiblement bidimensionnelle étant notamment une feuille ou un film (31) .

10. Composant composite renforcé par des fibres selon la revendication 8 ou 9, au moins des surfaces de l'élément d'espacement (20), qui ne sont pas parallèles à la surface de la couche en matière alvéolaire, sont mouillées avec la matière synthétique qui est utilisée pour former le matériau renforcé par des fibres, et ces surfaces au moins partiellement en contact avec le matériau de la couche en matière alvéolaire.
